# EUROPEAN PATENT APPLICATION

(11) **EP 4 271 075 A1**
(43) Date of publication of application: **01.11.2023**
(21) Application number: 20966507.4
(22) Date of filing: 24.12.2020
(51) Int. Cl.: H04W 72/04, H04W 76/28, H04W 76/23

(54) **TRANSMISSION RESOURCE SELECTION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: ZHAO, Qun, Beijing 100085 (CN)
(74) Representative: Gunzelmann, Rainer
(86) International application number: PCT/CN2020/139127
(87) International publication number: WO 2022/133935

(57) **Abstract**

The present disclosure belongs to the technical field of wireless communications. Provided are a transmission resource selection method and apparatus, a communication device, a storage medium, and a product. The method comprises: a user equipment (UE) at a sending end determining, according to discontinuous reception (DRX) settings of a UE at a receiving end, a time frequency transmission resource used by a sidelink transmission sent to the UE at the receiving end. Therefore, a UE at a sending end performs resource selection according to DRX settings of a UE at a receiving end, such that a selected time frequency transmission resource can be within an on duration of a DRX period of the UE at the receiving end, thereby ensuring that the UE at the sending end sends a sidelink transmission when the UE at the receiving end is in an active state; and in this way, a data loss situation caused by the fact that the UE at the receiving end cannot receive data can be prevented.

## Description

### TECHNICAL FIELD

The embodiments of the disclosure relate to the field of wireless communication technology, in particular to a method for selecting a transmission resource, an apparatus for selecting a transmission resource, a communication device, and a storage medium.

### BACKGROUND

Direct communication link (also known as direct-communication link, sidelink, direct-connection communication link, direct connection link) is a new link introduced to support direct communication between devices. A wireless interface corresponding to the direct communication link is called a direct communication interface (or a sidelink interface), and a sending-end UE (user equipment) and a receiving-end UE can transmit data through the direct communication interface.

At present, in a wireless communication system, the receiving-end UE that data transmission performs based on the direct communication interface can enter an activated state to blindly detect a PDCCH (physical downlink control channel) to discover its own data. Moreover, in order to reduce power consumption of the receiving UE, the receiving UE can turn off the receiver and enter a sleep/hibernation state.

However, when a receiving-end UE enters the sleep/hibernation state, a condition of missing the reception of the data sent by the sending UE may occur.

### SUMMARY

Embodiments of a first aspect of the disclosure provide a method for selecting a transmission resource, applied to a sending-end user equipment (UE), including: determining a time-frequency transmission resource used for direct transmission sent to a receiving-end UE based on a discontinuous reception DRX setting of the receiving-end UE.

Optionally, determining the time-frequency transmission resource used for the direct transmission sent to the receiving-end UE based on the discontinuous reception DRX setting of the receiving-end UE includes: excluding, from a set of candidate time-frequency resources, a candidate time-frequency resource that is not within a time range indicated by the DRX setting.

Optionally, after excluding, from the set of candidate time-frequency resources, the candidate time-frequency resource that is not within the time range indicated by the DRX setting, the method further includes: excluding, from the set of candidate time-frequency resources, an occupied resource with a sidelink reference signal receiving power S-RSRP greater than or equal to a threshold. The threshold is determined based on a lower limit of a number of candidate time-frequency resources to be retained in the set of candidate time-frequency resources.

Optionally, the lower limit of the number is determined based on a number N of remaining candidate time-frequency resources that are obtained by excluding, from the set of candidate time-frequency resources, the candidate time-frequency resource that is not within the time range indicated by the DRX setting, and/or based on a defined proportional coefficient X, where X is greater than zero and less than 1.

Optionally, the direct transmission adopts M repetitions, and determining the target transmission resource used for the direct transmission sent to the receiving-end user equipment based on the discontinuous reception DRX setting of the receiving-end user equipment includes: according to the DRX setting, time-frequency transmission resources used for first K repetitions of the M repetitions are within a time range indicated by the DRX setting.

Optionally, determining the time-frequency transmission resources used for the first K repetitions and time-frequency transmission resources used for subsequent (M-K) repetitions respectively. The time-frequency transmission resources used for the subsequent (M-K) repetitions are within the time range indicated by the DRX setting, or within a time period after the time range indicated by the DRX setting in which the first K repetitions are transmitted.

Optionally, a value of the K is obtained by at least one of the following methods: the value of the K being determined based on defined configuration information; the value of the K being configured by a network device through a high-level signaling; the value of the K being controlled by the network device through a downlink control signaling; or the value of the K being sent by a target UE.

Optionally, the method further includes: sending control information carrying the DRX setting to the receiving-end UE.

Optionally, the DRX setting carried by the control information is selected from a plurality of DRX settings, configured to indicate the receiving-end UE to adopt the DRX setting carried by the control information.

Optionally, the DRX setting of the receiving-end UE is obtained by at least one of the following methods: the DRX setting being determined based on defined configuration information; the DRX setting being sent by a network device; the DRX setting being sent by the receiving-end UE; or the DRX setting being sent by a target UE.

Optionally, the method further includes: sending the direct transmission to the receiving-end UE through the time-frequency transmission resource. The direct transmission carries information indicating a future time-frequency resource, configured to indicate that the receiving-end UE is in a state of receiving a sidelink control channel and/or a sidelink shared channel during a time period corresponding to the future time-frequency resource.

Optionally, the method further includes: determining a reception time point of feedback information corresponding to the direct transmission; and switching to the state of receiving the sidelink control channel and/or the sidelink shared channel according to the reception time point.

Embodiments of a second aspect of the disclosure provide a method for selecting a transmission resource, applied to a receiving-end UE, including: receiving direct transmission sent by a sending-end UE through a time-frequency transmission resource. The time-frequency transmission resource is determined based on a discontinuous reception DRX setting of the receiving-end UE.

Optionally, the direct transmission carries information indicating a future time-frequency resource, the method further includes: setting to a state of receiving a sidelink control channel and/or a sidelink shared channel during a time period corresponding to the future time-frequency resource.

Optionally, setting to the state of receiving the sidelink control channel and/or the sidelink shared channel during the time period corresponding to the future time-frequency resource includes: switching to the state of receiving the sidelink control channel and/or the sidelink shared channel before a starting time point of the time period corresponding to the future time-frequency resource.

Optionally, an interval between a switching time point of switching to the state and the starting time point is defined, or the interval is configured by a network device.

Optionally, the future time-frequency resource is a non-periodic resource, and setting to the state of receiving the sidelink control channel and/or the sidelink shared channel during the time period corresponding to the future time-frequency resource includes: in response to not receiving a target transport block TB of the direct transmission before the time period corresponding to the future time-frequency resource, setting to the state of receiving the sidelink control channel and/or the sidelink shared channel during the time period corresponding to the future time-frequency resource of the target TB.

Optionally, in response to receiving the target TB of the direct transmission before the time period corresponding to the future time-frequency resource, performing state switching according to the DRX setting during the time period corresponding to the future time-frequency resource of the target TB.

Optionally, the method further includes: receiving control information carrying the DRX setting sent by the sending-end UE; and switching to a state of receiving a sidelink control channel and/or a sidelink shared channel according to a time range indicated by the DRX setting in an activated state.

Embodiments of a third aspect of the disclosure provide an apparatus for selecting a transmission resource, applied to a sending-end UE, including: a determining module, configured to determine a time-frequency transmission resource used for direct transmission sent to a receiving-end user equipment based on a discontinuous reception DRX setting of the receiving-end user equipment.

Optionally, the determining module is configured to: exclude, from a set of candidate time-frequency resources, a candidate time-frequency resource that is not within a time range indicated by the DRX setting.

Optionally, the determining module is configured to: exclude, from the set of candidate time-frequency resources, an occupied resource with a sidelink reference signal receiving power S-RSRP greater than or equal to a threshold. The threshold is determined based on a lower limit of a number of candidate time-frequency resources to be retained in the set of candidate time-frequency resources.

Optionally, the lower limit of the number is determined based on a number N of remaining candidate time-frequency resources that are obtained by excluding, from the set of candidate time-frequency resources, the candidate time-frequency resource that is not within the time range indicated by the DRX setting, and/or based on a defined proportional coefficient X, where X is greater than zero and less than 1.

Optionally, the direct transmission adopts M repetitions, and the determining module is configured to: according to the DRX setting, time-frequency transmission resources used for first K repetitions of the M repetitions are within a time range indicated by the DRX setting.

Optionally, determining the time-frequency transmission resources used for the first K repetitions and time-frequency transmission resources used for subsequent (M-K) repetitions respectively. The time-frequency transmission resources used for the subsequent (M-K) repetitions are within the time range indicated by the DRX setting, or within a time period after the time range indicated by the DRX setting in which the first K repetitions are transmitted.

Optionally, a value of the K is obtained by at least one of the following methods: the value of the K being determined based on defined configuration information; the value of the K being configured by a network device through a high-level signaling; the value of the K being controlled by the network device through a downlink control signaling; or the value of the K being sent by a target UE.

Optionally, the apparatus further includes: an information sending module, configured to send control information carrying the DRX setting to the receiving-end UE.

Optionally, the DRX setting carried by the control information is selected from a plurality of DRX settings, configured to indicate the receiving-end UE to adopt the DRX setting carried by the control information.

Optionally, the DRX setting of the receiving-end UE is obtained by at least one of the following methods: the DRX setting being determined based on defined configuration information; the DRX setting being sent by a network device; the DRX setting being sent by the receiving-end UE; or the DRX setting being sent by a target UE.

Optionally, the apparatus further includes: a direct transmission sending module, configured to send the direct transmission to the receiving-end UE through the time-frequency transmission resource. The direct transmission carries information indicating a future time-frequency resource, configured to indicate that the receiving-end UE is in a state of receiving a sidelink control channel and/or a sidelink shared channel during a time period corresponding to the future time-frequency resource.

Optionally, the apparatus further includes: a switching module, configured to: determine a reception time point of feedback information corresponding to the direct transmission; and switch to the state of receiving the sidelink control channel and/or the sidelink shared channel according to the reception time point.

Embodiments of a fourth aspect of the disclosure provide an apparatus for selecting a transmission resource, applied to a receiving-end UE, including: a receiving module, configured to receive direct transmission sent by a sending-end UE through a time-frequency transmission resource. The time-frequency transmission resource is determined based on a discontinuous reception DRX setting of the receiving-end UE.

Optionally, the direct transmission carries information indicating a future time-frequency resource, the apparatus further includes: a setting module, configured to set to a state of receiving a sidelink control channel and/or a sidelink shared channel during a time period corresponding to the future time-frequency resource.

Optionally, the setting module is configured to: switch to the state of receiving the sidelink control channel and/or the sidelink shared channel before a starting time point of the time period corresponding to the future time-frequency resource.

Optionally, an interval between a switching time point of switching to the state and the starting time point is defined, or the interval is configured by a network device.

Optionally, the future time-frequency resource is a non-periodic resource, and the setting module is configured to: in response to not receiving a target transport block TB of the direct transmission before the time period corresponding to the future time-frequency resource, setting to the state of receiving the sidelink control channel and/or the sidelink shared channel during the time period corresponding to the future time-frequency resource of the target TB.

Optionally, the future time-frequency resource is a non-periodic resource, and the setting module is configured to: in response to receiving the target TB of the direct transmission before the time period corresponding to the future time-frequency resource, performing state switching according to the DRX setting during the time period corresponding to the future time-frequency resource of the target TB.

Optionally, the apparatus further includes: a switching module, configured to: receive control information carrying the DRX setting sent by the sending-end UE; and switch to a state of receiving a sidelink control channel and/or a sidelink shared channel according to a time range indicated by the DRX setting in an activated state.

Embodiments of a fifth aspect of the disclosure provide a communication device, including a transceiver; a memory; and a processor, respectively connected with the transceiver and the memory. The processor is configured to control wireless signal sending and receiving of the transceiver and to implement the method for selecting a transmission resource provided by the embodiments of the first aspect of the disclosure, or the method for selecting a transmission resource provided by the embodiments of the second aspect of the disclosure by executing computer-executable instructions on the memory.

Embodiments of a sixth aspect of the disclosure provide a computer storage medium having computer-executable instructions stored thereon. When the computer-executable instructions are executed by a processor, the method for selecting a transmission resource provided by the embodiments of the first aspect of the disclosure can be implemented, or the method for selecting a transmission resource provided by the embodiments of the second aspect of the disclosure can be implemented.

Embodiments of a seventh aspect of the disclosure provide a computer program product, including computer programs. When the computer programs are executed by a processor in a communication device, the method for selecting a transmission resource provided by the embodiments of the first aspect of the disclosure is implemented, or the method for selecting a transmission resource provided by the embodiments of the second aspect of the disclosure is implemented.

With the method for selecting a transmission resource, the apparatus for selecting a transmission resource, the communication device, and the storage medium according to the embodiments of the disclosure, the sending-end UE determines the time-frequency transmission resource used for the direct transmission sent to the receiving-end UE based on the DRX setting of the receiving-end UE. Therefore, the sending-end UE performs resource selection based on the DRX setting of the receiving-end UE, which can ensure that the selected time-frequency transmission resource is within the on duration of the receiving-end UE's DRX cycle, thereby ensuring that the sending-end UE sends the direct transmission when the receiving-end UE is in the activated state, which can avoid the situation where the receiving-end UE cannot receive data which may cause data loss.

Additional aspects and advantages of the disclosure will be given in part in the following descriptions, become apparent in part from the following descriptions, or be learned through the practice of the disclosure.

### BRIEF DESCRIPTION OF THE DRAWINGS

The above and/or additional aspects and advantages of the disclosure will become apparent and readily appreciated from the following descriptions made with reference to the drawings, in which:
FIG. 1 is a flowchart of a method for selecting a transmission resource according to an embodiment of the disclosure.
FIG. 2 is a flowchart of a method for selecting a transmission resource according to another embodiment of the disclosure.
FIG. 3 is a flowchart of a method for selecting a transmission resource according to another embodiment of the disclosure.
FIG. 4 is a flowchart of a method for selecting a transmission resource according to another embodiment of the disclosure.
FIG. 5 is a flowchart of a method for selecting a transmission resource according to another embodiment of the disclosure.
FIG. 6 is a flowchart of a method for selecting a transmission resource according to another embodiment of the disclosure.
FIG. 7 is a flowchart of a method for selecting a transmission resource according to another embodiment of the disclosure.
FIG. 8 is a block diagram of an apparatus for selecting a transmission resource according to an embodiment of the disclosure.
FIG. 9 is a block diagram of an apparatus for selecting a transmission resource according to an embodiment of the disclosure.
FIG. 10 is a block diagram of a UE according to an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the embodiments of the disclosure are only for the purpose of describing specific embodiments, and are not intended to limit the disclosure. The singular forms of "a" and "the" used in the embodiments of the disclosure and appended claims are also intended to include plural forms, unless the context clearly indicates other meanings. It should also be understood that the term "and/or" as used herein refers to and includes any or all possible combinations of one or more associated listed items.

It should be understood that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

Reference will be made in detail to embodiments of the disclosure below. Examples of the embodiments are illustrated in accompanying drawings, in which the same or similar elements and the elements having same or similar functions are denoted by same or similar reference numerals throughout the descriptions. The embodiments described with reference to the drawings are explanatory, intended to interpret the disclosure, and are not to be construed as a limitation of the disclosure.

Before describing the embodiments of the disclosure, in order to facilitate understanding, commonly used technical terms in the disclosure are first introduced.

DRX, refers to discontinuous reception.

PSCCH, refers to physical sidelink control channel.

PSSCH, refers to physical sidelink control channel.

HARQ, refers to hybrid automatic repeat request.

ACK, refers to acknowledgement.

S-RSRP, refers to sidelink reference signal receiving power.

With the continuous emergence of new generation of internet applications, higher requirements have been put forward for wireless communication technology. In this situation, it drives the continuous evolution of wireless communication technology to meet the needs of new internet applications.

At present, the Internet of Vehicles can effectively improve traffic safety, improve traffic efficiency, and enrich people's travel experience. Vehicle to everything (V2X) can include V2V (vehicle to vehicle) that supports communication between onboard devices, V2I (vehicle to infrastructure) that supports communication between onboard devices and roadside devices, and V2P (vehicle to pedestrian) that supports communication between onboard devices and handheld devices.

Utilizing existing cellular communication technology to support vehicle to everything communication can effectively utilize existing base station deployments, reduce equipment costs, and also be more conducive to providing QoS (quality of service) guaranteed services, to meet the needs of vehicle to everything business. Therefore, in LTE (long term evolution) Rel-14/15, cellular networks are provided to support V2X communication in the Internet of Vehicles, i.e., C-V2X (cellular-based V2X). In C-V2X, communication between the onboard devices and other devices can be relayed through base stations and core networks, i.e., utilizing communication links between terminal devices and base stations in the original cellular network for communication (UL (uplink)/DL (downlink) communication). Alternatively, communication can also be directly performed through a direct communication link (referred to as sidelink communication) between devices. Compared with Uu interface (cellular communication interface) communication, sidelink communication has characteristics of short delay and low cost, making it very suitable for direct communication between onboard devices and other peripheral devices geographically close.

With the development of the new generation 5G (fifth generation mobile communication technology) mobile communication technology, 5G NR (new radio) technology has been utilized in the 3GPP (Third Generation Partnership Project) Rel-16 to support new V2X communication services and scenarios, such as vehicle platooning, extended sensors, advanced driving, and remote driving, etc. In general, the 5G V2X Sidelink can provide higher communication rate, shorter communication delay, and more reliable communication quality. Based on the technology of Rel-16 V2X, Rel-17 Sidelink may continue to discuss how to further reduce communication delay and increase the reliability of direct communication through an inter-user coordination method.

Currently, a method for performing energy conservation through DRX is discussed in the Rel-17 NR Sidelink. During the on duration of the DRX, a UE enters an activated state to blindly detect the PDCCH to discover its own data. During the non-on duration of the DRX, the UE can enter a sleep/ hibernation state by turning off a receiver for energy conservation.

However, in the related art, a sending-end UE is unable to select resources based on a DRX setting of a receiving-end UE, thus unable to ensure that direct transmission sent by the sending-end UE falls within the on duration indicated by the DRX setting of the receiving-end UE. As a result, the receiving-end UE may miss the reception of data sent by the sending-end UE, resulting in data loss.

To solve the above problems, the disclosure provides a method for selecting a transmission resource, an apparatus for selecting a transmission resource, a communication device and a storage medium.

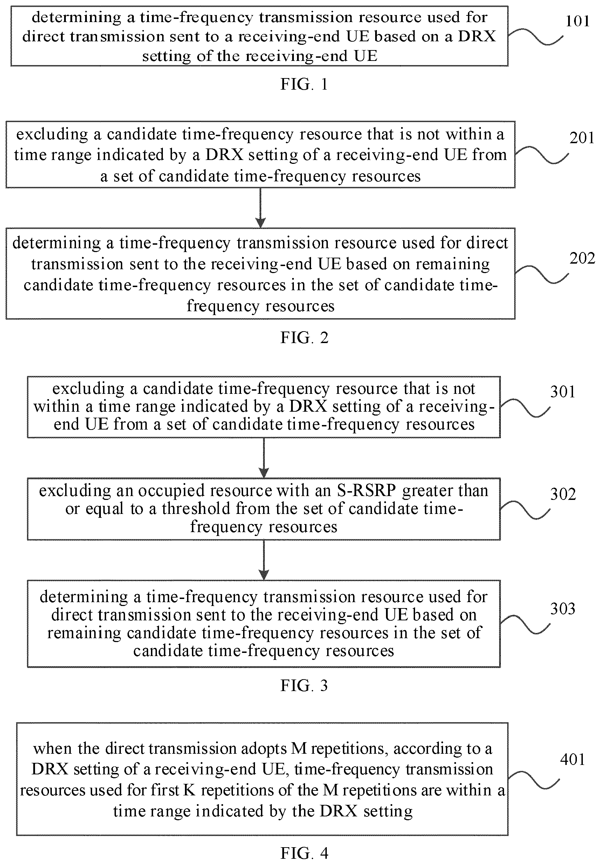

FIG. 1 is a flowchart of a method for selecting a transmission resource according to an embodiment of the disclosure.

The method for selecting a transmission resource according embodiments of the disclosure is suitable for a sending-end UE.

As illustrated in FIG. 1, the method for selecting a transmission resource includes following steps.

Step 101, a time-frequency transmission resource used for direct transmission sent to a receiving-end UE is determined based on a DRX setting of the receiving-end UE.

In an embodiment of the disclosure, the DRX setting of the receiving-end UE can include parameters such as a DRX cycle, an on duration (i.e. a time range during which the receiving-end UE is in an activated state) in the DRX cycle.

In an embodiment of the disclosure, the direct transmission can be signaling transmission, data transmission, or mixed signaling/data transmission.

In an embodiment of the disclosure, the sending-end UE can obtain the DRX setting of the receiving-end UE, and determine the time-frequency transmission resource used for the direct transmission sent to the receiving-end UE based on the DRX setting of the receiving-end UE. In this way, the sending-end UE perform resource selection based on the DRX setting of the receiving-end UE, which can ensure that the selected time-frequency transmission resource is within the on duration of the receiving-end UE's DRX cycle, thereby ensuring that the sending-end UE sends the direct transmission when the receiving-end UE is in the activated state. In this way, it can avoid the situation where the receiving-end UE cannot receive data, which may causes data loss.

In a possible implementation of the embodiment of the disclosure, the DRX setting of the receiving-end UE can be determined based on defined configuration information. The sending-end UE can determine the DRX setting of the receiving-end UE based on the defined configuration information.

In another possible implementation of the embodiment of the disclosure, the DRX setting of the receiving-end UE can be sent by a network device. For example, the sending-end UE can receive DCI (downlink control information) sent by the network device, and determine the DRX setting of the receiving-end UE based on the DCI. The DCI sent by network device can include PHY (physical layer) DCI, MAC (medium access control) DCI or RRC (radio resource control) DCI.

The network device can be a base station, which can include multiple cells that provide services for a terminal. According to different detailed application scenarios, the base station can also be referred to as an access point, or can be a device in an access network that communicates with a wireless terminal device through one or more sectors on an air interface, or can be other names.

In another possible implementation of the embodiment of the disclosure, the DRX setting of the receiving-end UE can be sent by the receiving-end UE, so that the sending-end UE can determine the DRX setting of the receiving-end UE based on data sent by the receiving-end UE.

In another possible implementation of the embodiment of the disclosure, the DRX setting of the receiving-end UE can be sent by a target UE, so that the sending-end UE can determine the DRX setting of the receiving-end UE based on data sent by the target UE. The target UE can be a UE negotiated with the receiving-end UE. For example, in a vehicle platooning scenario, a management device, such as a head user device, can manage UEs within a group. In this case, the head user device can be the target UE.

It should be noted that the above just takes that the DRX setting of the receiving-end UE is determined based on one of the methods: the DRX setting being determined according to the defined configuration information, the DRX setting being sent by the network device, the DRX setting being sent by the receiving-end UE, and the DRX setting being sent by the target UE, as an example. In practical applications, the above multiple methods can be combined to determine the DXR setting of the receiving-end UE, which is not limited in the disclosure.

In a possible implementation of the embodiment of the disclosure, the sending-end UE may send control information carrying the DRX setting to the receiving-end UE. The control information is used to indicate the receiving-end UE to adopt the DRX setting carried by the control information. Accordingly, the receiving-end UE can adopt the DRX setting carried by the control information after receiving the control information.

Optionally, after adopting the DRX setting carried by the control information, the receiving-end UE can send the DRX setting adopted by the receiving-end UE to the sending-end UE, and accordingly, the sending-end UE can obtain the DRX setting of the receiving-end UE.

In another possible implementation of the embodiment of the disclosure, in a case that the sending-end UE obtains multiple DRX settings, the sending-end UE can select a DRX setting that match a sending cycle from the multiple DRX settings based on the sending cycle, and instruct the receiving-end UE to execute the DRX setting. Optionally, the sending-end UE can send control information carrying the DRX setting to the receiving-end UE. The DRX setting carried by the control information is selected from the multiple DRX settings, and is used to indicate the receiving-end UE to adopt the DRX setting carried by the control information.

Optionally, after adopting the DRX setting carried by the control information, the receiving-end UE can send the DRX setting adopted by the receiving-end UE to the sending-end UE, and accordingly, the sending-end UE can obtain the DRX setting of the receiving-end UE.

For example, SCI with a new SCI (sidelink control information) format can be defined. The SCI contains an information field indicating a DRX cycle. The sending-end UE can send the SCI containing the information field indicating the DRX cycle to the receiving-end UE, to indicate the DRX setting that the receiving-end UE is to adopt or use. Alternatively, the receiving-end UE can send SCI containing an information field indicating the DRX to the sending-end UE, where the corresponding field in the SCI can indicate the DRX setting adopted or used by the receiving-end UE. Accordingly, the sending-end UE can determine the DRX setting adopted by the receiving-end UE based on the SCI after receiving the SCI. Specifically, the SCI can be either the 2nd stage SCI, i.e., SCI transmitted using the PSSCH, or the 1st stage SCI, i.e., SCI transmitted using the PSCCH.

With the method for selecting a transmission resource according to the embodiments of the disclosure, the time-frequency transmission resource used for the direct transmission sent to the receiving-end UE is determined based on the DRX setting of the receiving-end UE. Therefore, the sending-end UE performs resource selection based on the DRX setting of the receiving-end UE, which can ensure that the selected time-frequency transmission resource is within the on duration of the receiving-end UE's DRX cycle, thereby ensuring that the sending-end UE sends the direct transmission when the receiving-end UE is in the activated state. In this way, it can avoid the situation where the receiving-end UE cannot receive data, which may causes data loss.

Embodiments of the disclosure provide another method for selecting a transmission resource. FIG. 2 is a flowchart of a method for selecting a transmission resource according to another embodiment of the disclosure.

The method for selecting a transmission resource according embodiments of the disclosure is suitable for a sending-end UE.

As illustrated in FIG. 2, the method for selecting a transmission resource includes following steps.

Step 201, a candidate time-frequency resource that is not within a time range indicated by a DRX setting of a receiving-end UE is excluded from a set of candidate time-frequency resources.

It should be noted that the explanation of the DRX setting of the receiving-end UE can be found in the execution process of step 101 in the above embodiment, which is not elaborated here.

In an embodiment of the disclosure, the time range indicated by the DRX setting is a time range for the receiving-end UE to activate PSCCH/PSSCH reception, such as a time range in which the receiving end is in an activated state. The sending-end UE can infer a time range for the receiving-end UE to activate reception of the PSCCH and its corresponding PSSCH based on the DRX setting of the receiving-end UE, thereby determining the time range indicated by the DRX setting.

In an embodiment of the disclosure, for each candidate time-frequency resource in the set of candidate time-frequency resources, the sending-end UE can determine whether the candidate time-frequency resource is within the time range indicated by the DRX setting of the receiving-end UE. In a situation that the candidate time-frequency resource is not within the time range indicated by the DRX setting, the candidate time-frequency resource can be excluded from the set of candidate time-frequency resources.

Step 202, a time-frequency transmission resource used for direct transmission sent to the receiving-end UE is determined based on remaining candidate time-frequency resources in the set of candidate time-frequency resources.

In an embodiment of the disclosure, the sending-end UE may select, from the remaining candidate time-frequency resources in the set of candidate time-frequency resources, the time-frequency transmission resources used for the direct transmission sent to the receiving-end UE. For example, the time-frequency transmission resource used for the direct transmission sent to the receiving-end UE may be selected based on quality of each remaining candidate time -frequency resource, thereby adopting the time-frequency resource to send the direct transmission to the receiving-end UE.

With the method for selecting a transmission resource according to the embodiments of the disclosure, the candidate time-frequency resource that is not within the time range indicated by the DRX setting is excluded from the set of candidate time-frequency resources, the time-frequency transmission resource is determined based on the remaining candidate time-frequency resources in the set of candidate time-frequency resources. Therefore, the sending-end UE perform resource exclusion based on the DRX setting of the receiving-end UE, and selects the time-frequency transmission resource used for the direct transmission sent to the receiving-end UE from the remaining candidate time-frequency resources, so that the selected time-frequency transmission resource is within the on duration of the receiving-end UE's DRX cycle, thereby ensuring that the sending-end UE sends the direct transmission when the receiving-end UE is in the activated state, thus avoiding the situation where the receiving-end UE cannot receive data, resulting in data loss.

Embodiments of the disclosure provide another method for selecting a transmission resource. FIG. 3 is a flowchart of a method for selecting a transmission resource according to another embodiment of the disclosure.

The method for selecting a transmission resource according embodiments of the disclosure is suitable for a sending-end UE.

As illustrated in FIG. 3, the method for selecting a transmission resource includes following steps.

Step 301, a candidate time-frequency resource that is not within the time range indicated by the DRX setting is excluded from a set of candidate time-frequency resources.

In an embodiment of the disclosure, step 301 can be implemented in any way of the embodiments of the disclosure, which is not limited or elaborated in embodiments of the disclosure.

Step 302, an occupied resource with an S-RSRP greater than or equal to a threshold is excluded from the set of candidate time-frequency resources.

The threshold is determined based on a lower limit of a number of candidate time-frequency resources to be retained in the set of candidate time-frequency resources.

It should be noted that when the number of candidate time-frequency resources remaining in the set of candidate time-frequency resources is small, neighboring UEs may choose the same candidate time-frequency resource to send direct transmission. Therefore, in the disclosure, in order to avoid neighboring interference, the number of candidate time-frequency resources that need to be retained in the set of candidate time-frequency resources may be greater than or equal to the lower limit of number.

In a possible implementation of embodiments of the disclosure, the lower limit of the number of candidate time-frequency resources to be retained can be determined based on a number N of remaining candidate time-frequency resources that are obtained by excluding the candidate time-frequency resource that is not within the time range indicated by the DRX setting from the set of candidate time-frequency resources, and/or based on a defined proportional coefficient X. The X can be configured by a network device, with a value greater than zero and less than 1. For example, the value of X can be 40%, 20%, or 10%. Optionally, in the Rel-15 protocol, the lower limit of the number can be X * N.

In an embodiment of the disclosure, the sending-end UE can exclude a candidate time-frequency resource that has already been occupied by other UEs from the set of candidate time-frequency resources based on a resource-aware result. The candidate time-frequency resource that has already been occupied by other UEs is recorded as an occupied resource in the embodiment of the disclosure.

Optionally, the sending-end UE can determine the S-RSRP corresponding to each candidate time-frequency resource. When the S-RSRP of a candidate time-frequency resource is greater than or equal to the threshold, the candidate time-frequency resource can be determined as an occupied resource and excluded from the set of candidate time-frequency resources.

For example, the sending-end UE uses a resource selection method which is based on channel monitoring, when the sending-end UE performs resource exclusion based on a result of channel monitoring, the threshold is defined based on X * N, and occupied resources with S-RSRP greater than or equal to the threshold are excluded from the set of candidate time-frequency resources.

Step 303, a time-frequency transmission resource is determined based on remaining candidate time-frequency resources in the set of candidate time-frequency resources.

In an embodiment of the disclosure, step 303 can be implemented in any way of the embodiments of the disclosure, which is not limited or elaborated in embodiments of the disclosure.

With the method for selecting a transmission resource according to the embodiments of the disclosure, the candidate time-frequency resource that is not within the time range indicated by the DRX setting is excluded from the set of candidate time-frequency resources, the occupied resource with S-RSRP greater than or equal to the threshold is excluded from the set of candidate time-frequency resources, and the time-frequency transmission resource is determined based on the remaining candidate time-frequency resources in the set of candidate time-frequency resources. Therefore, on the one hand, it can avoid the neighboring interference, and on the other hand, it can also avoid the situation where the receiving-end UE cannot receive data, resulting in data loss.

Embodiments of the disclosure provide another method for selecting a transmission resource. FIG. 4 is a flowchart of a method for selecting a transmission resource according to another embodiment of the disclosure.

The method for selecting a transmission resource according embodiments of the disclosure is suitable for a sending-end UE.

As illustrated in FIG. 4, the method for selecting a transmission resource includes following steps.

Step 401, when the direct transmission adopts M repetitions, according to a DRX setting of a receiving-end UE, time-frequency transmission resources used for first K repetitions of the M repetitions are within a time range indicated by the DRX setting.

It should be noted that the explanation of the DRX setting of the receiving-end UE can be found in the execution process in the above embodiments, which is not elaborated here.

In an embodiment of the disclosure, the time range indicated by the DRX setting is a time range for the receiving-end UE to activate PSCCH/PSSCH reception, such as a time range in which the receiving end is in an activated state. The sending-end UE can infer a time range for the receiving-end UE to activate reception of the PSCCH and its corresponding PSSCH based on the DRX setting of the receiving-end UE, thereby determining the time range indicated by the DRX setting.

In an embodiment of the disclosure, a value of M can be determined by the sending-end UE based on the adopted retransmission mechanism and other device scenarios.

In a possible implementation of the embodiments of the disclosure, a value of K may be a fixed value, or the value of K may be determined based on defined configuration information.

In another possible implementation of the embodiments of the disclosure, the value of K can be configured by a network device through a high-level signaling. The sending-end UE can receive high-level signaling sent by the network device, and determine the value of K based on the high-level signaling.

In another possible implementation of the embodiments of the disclosure, the value of K can be controlled by the network device through DCI. The sending-end UE can receive the DCI sent by the network device and determine the value of K based on the DCI.

In another possible implementation of the embodiments of the disclosure, the value of K can be sent by a target UE. For example, the target UE can send sidelink control information (SCI) to the sending-end UE. The SCI can include physical layer SCI, MAC layer SCI, or RRC layer SCI. Therefore, the sending-end UE can determine the value of K based on the SCI sent by the target UE.

It should be noted that the above just takes that the value of K is determined based on one of the methods: the value of the K being determined based on the defined configuration information, the value of the K being configured by the network device through the high-level signaling, the value of the K being controlled by the network device through the DCI, and the value of the K being sent by the target UE, as an example. In practical applications, the above multiple methods can be combined to determine the value of K, which is not limited in the disclosure.

In an embodiment of the disclosure, the time-frequency transmission resources used for the first K repetitions and time-frequency transmission resources used for subsequent (M-K) repetitions in the M repetitions can be determined respectively.

Optionally, when the time-frequency transmission resources used for the first K repetitions in the M repetitions, it can be determined whether each candidate time-frequency resource in the set of candidate time-frequency resources is within the time range indicated by the DRX setting. When a candidate time-frequency resource is not within the time range indicated by the DRX setting, the candidate time-frequency resource can be excluded from the set of candidate time-frequency resources. When a candidate time-frequency resource is within the time range indicated by the DRX setting, it can be retained. The time-frequency transmission resources used for the first K repetitions in the M repetitions can be determined from the remaining candidate time-frequency resources in the set of candidate time-frequency resources. In this way, it can be ensured that the time-frequency transmission resources used for the selected K repetitions are within the time range indicated by the DRX setting, which can enable the sending-end UE to send the direct transmission when the receiving-end UE is in an activated state, thereby avoiding the situation where the receiving-end UE cannot receive data, resulting in data loss.

It should be understood that, the time range when the receiving-end UE is in the activated state is small, that is, the time range indicated by the DRX setting of the receiving-end UE is small, and there may be a situation where it is not possible to configure all the time-frequency transmission resources used for the M repetitions within the time range indicated by the DRX setting. For the subsequent (M-K) repetitions that are not within the time range indicated by the DRX setting, a resource reservation method can be used to indicate that the time-frequency transmission resources used for the subsequent (M-K) repetitions are within a time period after the aforementioned time range, so that the receiving-end UE is in the activated state for receiving during the time period.

Optionally, when the time-frequency transmission resources used for the subsequent (M-K) repetitions in the M repetitions are determined, it can be determined whether each candidate time-frequency resource in the set of candidate time-frequency resources is within a time period before the time range indicated by the DRX setting. In the case where a candidate time-frequency resource is within the time period before the time range indicated by the DRX setting, the candidate time-frequency resource can be excluded from the set of candidate time-frequency resources, and the time-frequency transmission resources used for the subsequent (M-K) repetitions in the M repetitions can be determined from the remaining candidate time-frequency resources in the set of candidate time-frequency resources. Therefore, it can be ensured that the selected time-frequency transmission resources used for the subsequent (M-K) repetitions are within the time range indicated by the DRX setting, or that the selected time-frequency transmission resources used for the subsequent (M-K) repetitions are within the time period after the time range indicated by the DRX, the first K repetitions are transmitted in the time range indicated by the DRX.

With the method for selecting a transmission resource according to embodiments of the disclosure, when the direct connection transmission adopts the M repetitions, according to the DRX setting of the receiving-end UE, the time-frequency transmission resources used for the first K repetitions in the M repetitions are within the time range indicated by the DRX setting. In this way, it can be ensured that the sending-end UE sends the direct transmission when the receiving-end UE is in the activated state, thereby avoiding the situation where the receiving-end UE cannot receive data, resulting in data loss.

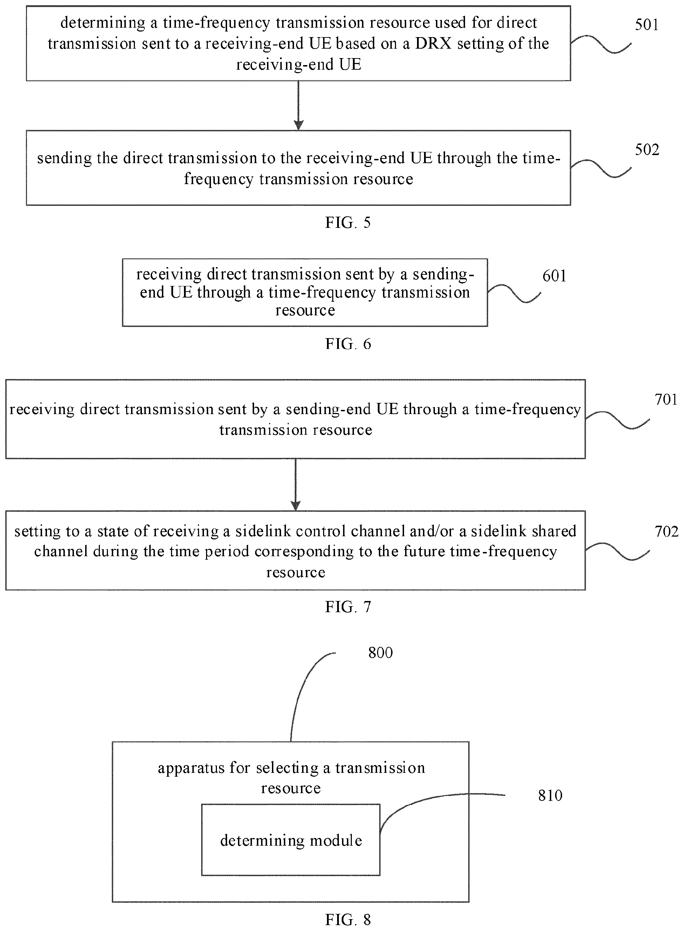

Embodiments of the disclosure provide another method for selecting a transmission resource. FIG. 5 is a flowchart of a method for selecting a transmission resource according to another embodiment of the disclosure.

The method for selecting a transmission resource according embodiments of the disclosure is suitable for a sending-end UE.

As illustrated in FIG. 5, the method for selecting a transmission resource includes following steps.

Step 501, a time-frequency transmission resource used for direct transmission sent to a receiving-end UE is determined based on a DRX setting of the receiving-end UE.

It should be noted that the step 501 can be implemented in any way in the embodiments of the disclosure, which is not limited or elaborated in the embodiments of the disclosure.

Step 502, the direct transmission is sent to the receiving-end UE through the time-frequency transmission resource.

The direct transmission carries information indicating a future time-frequency resource, which is configured to indicate that the receiving-end UE is in an activated state during a time period corresponding to the future time-frequency resource.

In an embodiment of the disclosure, after determining the time-frequency transmission resource used for the direct transmission, the sending-end UE can use the time-frequency transmission resource to send the direct transmission to the receiving-end UE. Correspondingly, when the receiving-end UE receives the direct transmission, the receiving-end UE can be set to the activated state or to a state of receiving PSCCH and/or PSSCH during the time period corresponding to the future time-frequency resource according to the information indicating the future time-frequency resource carried in the direct transmission. In the disclosure, for a current resource transmission, next one or next two future time-frequency resources can be reserved, so that after the receiving end receives at least one direct transmission correctly, the receiving end can be set to the activated state or to the state of receiving PSCCH and/or PSSCH during the time period corresponding to the future time-frequency resource. That is, subsequent reception is performed based on the reserved future time-frequency resource.

In an embodiment of the disclosure, after the sending-end UE sends the direct transmission to the receiving-end UE, if the sending-end is also configured with DRX and enables direct transmission feedback, the sending-end may switch to the state of receiving the PSCCH and/or PSSCH at a reception time point of feedback information corresponding to the direct transmission. Optionally, the sending-end UE can determine the reception time point of feedback information corresponding to the direct transmission. For example, the sending-end UE can calculate the reception time point of feedback information corresponding to the direct transmission according to specification TS 38.213 16.3. At the reception time point, it switches to the state of receiving the PSCCH and/or PSSCH to receive corresponding feedback information.

For example, when the feedback information is a HARQ-ACK feedback, the sending-end UE can calculate, based on a time-frequency resource location used for the direct transmission, a corresponding HARQ-ACK feedback time-frequency resource location, i.e., a reception time point of the HARQ-ACK feedback. When the calculated HARQ-ACK feedback time-frequency resource location is not within the on duration of a DRX cycle of the sending-end UE, the sending-end UE may switch to the state of receiving the PSCCH/PSSCH at the HARQ-ACK feedback time-frequency resource location, to receive the HARQ feedback information.

With method for selecting a transmission resource according to embodiments of the disclosure, the time-frequency transmission resource used for the direct transmission sent to the receiving-end UE is determined based on the DRX setting of the receiving-end UE, the direct transmission is sent to the receiving-end UE using the time-frequency transmission resource. The direct transmission carries the information indicating the future time-frequency resource, which is used to indicate that the receiving-end UE is in the activated state during the time period corresponding to the future time-frequency resource. In this way, it can be ensured that the sending-end UE sends the direct transmission when the receiving-end UE is in the activated state, thereby avoiding the situation where the receiving-end UE cannot receive data, resulting in data loss.

Embodiments of the disclosure provide another method for selecting a transmission resource. FIG. 6 is a flowchart of a method for selecting a transmission resource according to another embodiment of the disclosure.

The method for selecting a transmission resource according embodiments of the disclosure is suitable for a receiving-end UE.

As illustrated in FIG. 6, the method for selecting a transmission resource includes following steps.

Step 601, direct transmission sent by a sending-end UE through a time-frequency transmission resource is received.

The time-frequency transmission resource is determined based on a DRX setting of the receiving-end UE.

In an embodiment of the disclosure, the DRX setting of the receiving-end UE can include parameters such as a DRX cycle, an on duration (i.e. a time range during which the receiving-end UE is in an activated state) in the DRX cycle.

In an embodiment of the disclosure, the direct transmission can be signaling transmission, data transmission, or mixed signaling/data transmission.

In an embodiment of the disclosure, the sending-end UE can obtain the DRX setting of the receiving-end UE, and determine the time-frequency transmission resource used for the direct transmission sent to the receiving-end UE based on the DRX setting of the receiving-end UE. Thus, the sending-end UE can send the direct transmission to the receiving-end UE using the time-frequency transmission resource. Accordingly, the receiving-end UE can receive the direct transmission sent by the sending-end UE using the time-frequency transmission resource.

In a possible implementation of the embodiment of the disclosure, the DRX setting of the receiving-end UE can be determined based on defined configuration information. The sending-end UE can determine the DRX setting of the receiving-end UE based on the defined configuration information.

In another possible implementation of the embodiment of the disclosure, the DRX setting of the receiving-end UE can be sent by a network device. For example, the sending-end UE can receive DCI sent by the network device, and determine the DRX setting of the receiving-end UE based on the DCI. The DCI sent by network device can include PHY DCI, MAC DCI or RRC DCI.

In another possible implementation of the embodiment of the disclosure, the DRX setting of the receiving-end UE can be sent by the receiving-end UE, so that the sending-end UE can determine the DRX setting of the receiving-end UE based on data sent by the receiving-end UE.

In another possible implementation of the embodiment of the disclosure, the DRX setting of the receiving-end UE can be sent by a target UE, so that the sending-end UE can determine the DRX setting of the receiving-end UE based on data sent by the target UE. The target UE can be a UE negotiated with the receiving-end UE. For example, in a vehicle platooning scenario, a management device, such as a head user device, can manage UEs within a group. In this case, the head user device can be the target UE.

It should be noted that the above just takes that the DRX setting of the receiving-end UE is determined based on one of the methods: the DRX setting being determined according to the defined configuration information, the DRX setting being sent by the network device, the DRX setting being sent by the receiving-end UE, and the DRX setting being sent by the target UE, as an example. In practical applications, the above multiple methods can be combined to determine the DXR setting of the receiving-end UE, which is not limited in the disclosure.

In a possible implementation of the embodiment of the disclosure, the sending-end UE may send control information carrying the DRX setting to the receiving-end UE. The control information is used to indicate the receiving-end UE to adopt the DRX setting carried by the control information. Accordingly, the receiving-end UE can adopt the DRX setting carried by the control information after receiving the control information. That is, the receiving-end UE can switch to a state of receiving PSCCH and/or PSSCH based on a time range indicated by the DRX setting, the receiving-end UE is in the activated state in the time range indicated by the DRX setting.

Optionally, after adopting the DRX setting carried by the control information, the receiving-end UE can send the DRX setting adopted by the receiving-end UE to the sending-end UE, and accordingly, the sending-end UE can obtain the DRX setting of the receiving-end UE.

Optionally, the receiving-end UE can send feedback information to the sending-end UE after receiving the direct transmission.

With the method for selecting a transmission resource according to the embodiments of the disclosure, the receiving-end UE receives the direct transmission sent using the time-frequency transmission resource by the sending-end UE. The time-frequency transmission resource is determined based on the DRX setting of the receiving-end UE. Therefore, the sending-end UE performs resource selection based on the DRX setting of the receiving-end UE, which can ensure that the selected time-frequency transmission resource is within the on duration of the receiving-end UE's DRX cycle, thereby ensuring that the sending-end UE sends the direct transmission when the receiving-end UE is in the activated state. In this way, it can avoid the situation where the receiving-end UE cannot receive data, which may causes data loss.

Embodiments of the disclosure provide another method for selecting a transmission resource. FIG. 7 is a flowchart of a method for selecting a transmission resource according to another embodiment of the disclosure.

The method for selecting a transmission resource according embodiments of the disclosure is suitable for a receiving-end UE.

As illustrated in FIG. 7, the method for selecting a transmission resource includes following steps.

Step 701, direct transmission sent by a sending-end UE through a time-frequency transmission resource is received.

The time-frequency transmission resource is determined based on a DRX setting of the receiving-end UE.

In an embodiment of the disclosure, step 701 can be implemented in any way of the embodiments of the disclosure, which is not limited or elaborated in embodiments of the disclosure.

The direct transmission may carry information indicating a future time-frequency resource, which is configured to indicate that the receiving-end UE is in an activated state or a state of receiving PSCCH and/or PSSCH during a time period corresponding to the future time-frequency resource.

Step 702, the receiving-end UE is set to a state of receiving a sidelink control channel and/or a sidelink shared channel during the time period corresponding to the future time-frequency resource.

In an embodiment of the disclosure, when the receiving-end UE receives the direct transmission, the receiving-end UE can be set to the state of receiving the PSCCH and/or the PSSCH during the time period corresponding to the future time-frequency resource according to the information indicating the future time-frequency resource carried in the direct transmission. That is, in the disclosure, for a current resource transmission, next one or next two future time-frequency resources can be reserved, so that after the receiving-end UE receives at least one direct transmission correctly, the receiving-end UE can be set to the state of receiving the PSCCH and/or the PSSCH during the time period corresponding to the future time-frequency resource. That is, subsequent reception is performed based on the reserved future time-frequency resource.

For example, the receiving-end UE can set a timer with an ending time point equal to a starting time point of the time period corresponding to the future time-frequency resource. When the timer expires, the receiving-end UE can switch to the state of receiving the PSCCH and/or the PSSCH.

Optionally, considering that state switching requires a certain amount of time, in order to ensure that the receiving-end UE can perform the state switching in time, in a possible implementation of the embodiments of the disclosure, based on the starting time point of the time period corresponding to the future time-frequency resource, the receiving-end UE can switch to the state of receiving the PSCCH and/or the PSSCH before the starting time point.

Optionally, an interval between a switching time point of switching to the state of receiving the PSCCH and/or the PSSCH and the starting time point is determined as S time units. In the disclosure, switching to the state of receiving the PSCCH and/or the PSSCH can be performed S time units before the starting time point of the time period corresponding to future time-frequency resources.

S can be defined, or S can be configured by a network device. For example, the network device can configure S through downlink signaling.

The time unit can be absolute physical time units such as seconds, milliseconds, microseconds, etc., or the time unit can be time units such as frames, subframes, symbols, time slots, etc., which is not limited in the disclosure.

Optionally, the reserved future time-frequency resource can be a periodic resource or a non-periodic resource. The periodic resource refers to a resource reserved for transmitting a transport block (TB) of a next direct transmission, which is a new TB transmission. The non-periodic resource refers to a resource reserved for multiple repeated transmissions of the same TB. To ensure that each TB can be correctly received by the receiving-end UE, the receiving-end UE may be in the activated state during the time period corresponding to each reserved periodic resource.

In a possible implementation of embodiments of the disclosure, when the reserved future time-frequency resource is the non-periodic resource, it can be determined whether a target TB of the direct transmission is received before the time period corresponding to the future time-frequency resource. If the target TB of the direct transmission is not received before the time period corresponding to the future time-frequency resource, it can be set to the state of receiving the PSCCH and/or the PSSCH during a time period corresponding to the future time-frequency resource of the target TB. If the target TB of the direct transmission is received before the time period corresponding to the future time-frequency resource, the state switching may be performed, according to the DRX setting, during the time period corresponding to the future time-frequency resource of the target TB.

For example, if the receiving-end UE receives the target TB of direct transmission before the time period corresponding to the future time-frequency resource, the receiving-end UE may not need to switch to the state of receiving the PSCCH and/or the PSSCH, i.e., the activated state, during the time period corresponding to the future time-frequency resource. For example, the receiving-end UE can stop the corresponding timer in the above examples.

With the method for selecting a transmission resource according to embodiments of the disclosure, by carrying the information indicating the future time-frequency resource through the direct transmission, the receiving-end UE is set to the state of receiving the sidelink control channel and/or the sidelink shared channel during the time period corresponding to the future time-frequency resource. In this way, it can be ensured that the sending-end UE sends the direct transmission when the receiving-end UE is in the activated state, thereby avoiding the situation where the receiving-end UE cannot receive data, which may cause data loss.

Corresponding to the method for selecting a transmission resource provided in the above embodiments illustrated in FIG. 1 to FIG. 5, the disclosure further provides an apparatus for selecting a transmission resource. As the apparatus for selecting a transmission resource provided in the embodiments of the disclosure corresponds to the method for selecting a transmission resource provided in the above embodiments illustrated in FIG. 1 to FIG. 5, the implementation method of the method for selecting a transmission resource is also applicable to the apparatus for selecting a transmission resource provided in the embodiments of the disclosure, which are not described in detail herein.

FIG. 8 is a block diagram of an apparatus for selecting a transmission resource according to an embodiment of the disclosure. The apparatus is applied to a sending-end UE.

As illustrated in FIG. 8, the apparatus 800 for selecting a transmission resource includes a determining module 810.

The determining module 810 is configured to determine a time-frequency transmission resource used for direct transmission sent to a receiving-end user equipment based on a discontinuous reception DRX setting of the receiving-end user equipment.

Optionally, the determining module 810 is configured to: exclude a candidate time-frequency resource that is not within a time range indicated by the DRX setting from a set of candidate time-frequency resources.

Optionally, the determining module 810 is configured to: exclude an occupied resource with a sidelink reference signal receiving power S-RSRP greater than or equal to a threshold from the set of candidate time-frequency resources. The threshold is determined based on a lower limit of a number of candidate time-frequency resources to be retained in the set of candidate time-frequency resources.

Optionally, the lower limit of the number is determined based on a number N of remaining candidate time-frequency resources that are obtained by excluding the candidate time-frequency resource that is not within the time range indicated by the DRX setting from the set of candidate time-frequency resources, and/or based on a defined proportional coefficient X, where X is greater than zero and less than 1.

Optionally, the direct transmission adopts M repetitions, and the determining module 810 is configured to: according to the DRX setting, time-frequency transmission resources used for first K repetitions of the M repetitions are within a time range indicated by the DRX setting.

Optionally, determining the time-frequency transmission resources used for the first K repetitions and time-frequency transmission resources used for subsequent (M-K) repetitions respectively. The time-frequency transmission resources used for the subsequent (M-K) repetitions are within the time range indicated by the DRX setting, or within a time period after the time range indicated by the DRX setting in which the first K repetitions are transmitted.

Optionally, a value of the K is obtained by at least one of the following methods: the value of the K being determined based on defined configuration information; the value of the K being configured by a network device through a high-level signaling; the value of the K being controlled by the network device through a downlink control signaling; or the value of the K being sent by a target UE.

Optionally, the apparatus 800 further includes: an information sending module, configured to send control information carrying the DRX setting to the receiving-end UE.

Optionally, the DRX setting carried by the control information is selected from a plurality of DRX settings, configured to indicate the receiving-end UE to adopt the DRX setting carried by the control information.

Optionally, the DRX setting of the receiving-end UE is obtained by at least one of the following methods: the DRX setting being determined based on defined configuration information; the DRX setting being sent by a network device; the DRX setting being sent by the receiving-end UE; or the DRX setting being sent by a target UE.

Optionally, the apparatus 800 further includes: a direct transmission sending module, configured to send the direct transmission to the receiving-end UE through the time-frequency transmission resource. The direct transmission carries information indicating a future time-frequency resource, configured to indicate that the receiving-end UE is in a state of receiving a sidelink control channel and/or a sidelink shared channel during a time period corresponding to the future time-frequency resource.

Optionally, the apparatus 800 further includes: a switching module, configured to: determine a reception time point of feedback information corresponding to the direct transmission; and switch to the state of receiving the sidelink control channel and/or the sidelink shared channel according to the reception time point.

With the apparatus for selecting a transmission resource according to the embodiments of the disclosure, the time-frequency transmission resource used for the direct transmission sent to the receiving-end UE is determined based on the DRX setting of the receiving-end UE. Therefore, the sending-end UE performs resource selection based on the DRX setting of the receiving-end UE, which can ensure that the selected time-frequency transmission resource is within the on duration of the receiving-end UE's DRX cycle, thereby ensuring that the sending-end UE sends the direct transmission when the receiving-end UE is in the activated state. In this way, it can avoid the situation where the receiving-end UE cannot receive data, which may causes data loss.

Corresponding to the method for selecting a transmission resource provided in the above embodiments illustrated in FIG. 6 to FIG. 7, the disclosure further provides an apparatus for selecting a transmission resource. As the apparatus for selecting a transmission resource provided in the embodiments of the disclosure corresponds to the method for selecting a transmission resource provided in the above embodiments illustrated in FIG. 6 to FIG. 7, the implementation method of the method for selecting a transmission resource is also applicable to the apparatus for selecting a transmission resource provided in the embodiments of the disclosure, which are not described in detail herein.

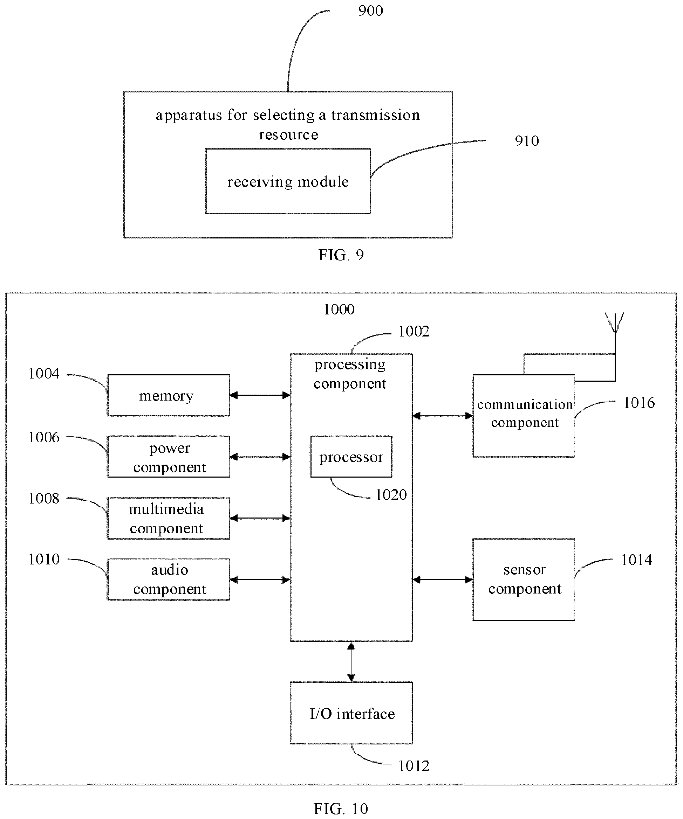

FIG. 9 is a block diagram of an apparatus for selecting a transmission resource according to an embodiment of the disclosure. The apparatus is applied to a receiving-end UE.

As illustrated in FIG. 9, the apparatus 900 for selecting a transmission resource includes a receiving module 910.

The receiving module 910 is configured to receive direct transmission sent by a sending-end UE through a time-frequency transmission resource. The time-frequency transmission resource is determined based on a discontinuous reception DRX setting of the receiving-end UE.

Optionally, the direct transmission carries information indicating a future time-frequency resource, the apparatus 900 further includes: a setting module, configured to set to a state of receiving a sidelink control channel and/or a sidelink shared channel during a time period corresponding to the future time-frequency resource.

Optionally, the setting module is configured to: switch to the state of receiving the sidelink control channel and/or the sidelink shared channel before a starting time point of the time period corresponding to the future time-frequency resource.

Optionally, an interval between a switching time point of switching to the state and the starting time point is defined, or the interval is configured by a network device.

Optionally, the future time-frequency resource is a non-periodic resource, and the setting module is configured to: in response to not receiving a target transport block TB of the direct transmission before the time period corresponding to the future time-frequency resource, setting to the state of receiving the sidelink control channel and/or the sidelink shared channel during the time period corresponding to the future time-frequency resource of the target TB.

Optionally, the future time-frequency resource is a non-periodic resource, and the setting module is configured to: in response to receiving the target TB of the direct transmission before the time period corresponding to the future time-frequency resource, performing state switching according to the DRX setting during the time period corresponding to the future time-frequency resource of the target TB.

Optionally, the apparatus 900 further includes: a switching module, configured to: receive control information carrying the DRX setting sent by the sending-end UE; and switch to a state of receiving a sidelink control channel and/or a sidelink shared channel according to a time range indicated by the DRX setting in an activated state.

With the apparatus for selecting a transmission resource according to the embodiments of the disclosure, the direct transmission sent by the sending-end UE using the time-frequency transmission resource is received. The time-frequency transmission resource is determined based on the DRX setting of the receiving-end UE. Therefore, the sending-end UE performs resource selection based on the DRX setting of the receiving-end UE, which can ensure that the selected time-frequency transmission resource is within the on duration of the receiving-end UE's DRX cycle, thereby ensuring that the sending-end UE sends the direct transmission when the receiving-end UE is in the activated state. In this way, it can avoid the situation where the receiving-end UE cannot receive data, which may causes data loss.

To implement the above embodiments, the disclosure further provides a communication device.

The communication device provided by the embodiments of the disclosure includes a processor, a transceiver, a memory, and executable programs stored on the memory and capable to be executed by the processor. When the processor executes the executable instructions, the aforementioned method is implemented.

The communication device can be the aforementioned sending-end UE or receiving-end UE.

The processor may include various types of storage media, which are non-temporary computer storage media that can continue to remember and store information on the communication device after power failure. The communication device includes the sending-end UE or the receiving-end UE.

The processor can be connected to the memory through a bus or other means for reading the executable programs stored on the memory, for example, at least one of FIG. 1 to FIG. 7.

In order to implement the above embodiments, the disclosure further proposes a computer storage medium.

The computer storage medium provided in the embodiments of the disclosure stores executable programs. After the executable programs are executed by a processor, the aforementioned methods can be implemented, such as at least one of FIG. 1 to FIG. 7.

FIG. 10 is a block diagram of a UE 1000 according to an embodiment of the disclosure. For example, the UE 1000 may be a mobile phone, a computer, a digital broadcasting terminal, a message transceiver device, a game console, a tablet device, a medical device, a fitness device and a personal digital assistant.

As illustrated in FIG. 10, the UE 1000 may include at least one of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the UE 1000, such as the operations associated with display, telephone calls, data communications, camera operations, and recording operations. The processing component 1002 may include one or more processors 1020 to execute instructions to implement all or part of the steps in the above described method. Moreover, the processing component 1002 may include one or more modules which facilitate the interaction between the processing component 1002 and other components. For example, the processing component 1002 may include a multimedia module to facilitate the interaction between the multimedia component 1008 and the processing component 1002.

The memory 1004 is configured to store various types of data to support the operation of the UE 1000. Examples of such data include instructions for any applications or methods operated on the UE 1000, contact data, phonebook data, messages, pictures, video, etc. The memory 1004 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1006 provides power to various components of the UE 1000. The power component 1006 may include a power management system, one or more power sources, and any other components associated with the generation, management, and distribution of power in the UE 1000.

The multimedia component 1008 includes a screen providing an output interface between the UE 1000 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 1008 includes a front-facing camera and/or a rear-facing camera. When the UE 1000 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1010 is configured to output and/or input audio signals. For example, the audio component 1010 includes a microphone (MIC) configured to receive an external audio signal when the UE 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes at least one sensor to provide status assessments of various aspects of the UE 1000. For instance, the sensor component 1014 may detect an open/closed status of the UE 1000, relative positioning of components, e.g., the display and the keypad, of the UE 1000, a change in position of the UE 1000 or a component of the UE 1000, a presence or absence of user contact with the UE 1000, an orientation or an acceleration/deceleration of the UE 1000, and a change in temperature of the UE 1000. The sensor component 1014 may include a proximity sensor configured to detect the presence of nearby objects without any physical contact. The sensor component 1014 may also include a light sensor, such as a Complementary Metal Oxide Semiconductor (CMOS) or Charge-Coupled Device (CCD) image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the UE 1000 and other devices. The UE 1000 can access a wireless network based on a communication standard, such as Wi-Fi, 2G or 3G, or a combination thereof. In an exemplary embodiment, the communication component 1016 receives a broadcast signal or broadcast associated information from an external broadcast management system via a broadcast channel. In an exemplary embodiment, the communication component 1016 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the UE 1000 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In an exemplary embodiment, there is also provided a non-transitory computer readable storage medium including instructions, such as the memory 1004. The above instructions may be executed by the processor 1020 in the device UE 1000, for performing the above methods. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. The disclosure is intended to cover any variations, uses, or adaptations of the embodiments of the disclosure following the general principles thereof and including such departures from the disclosure as come within known or customary practice in the art. It is intended that the specification and embodiments are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for selecting a transmission resource, applied to a sending-end user equipment, comprising:
determining a time-frequency transmission resource used for direct transmission sent to a receiving-end user equipment based on a discontinuous reception DRX setting of the receiving-end user equipment.

2. The method of claim 1, wherein determining the time-frequency transmission resource used for the direct transmission sent to the receiving-end user equipment based on the discontinuous reception DRX setting of the receiving-end user equipment comprises:
excluding, from a set of candidate time-frequency resources, a candidate time-frequency resource that is not within a time range indicated by the DRX setting.

3. The method of claim 2, after excluding, from the set of candidate time-frequency resources, the candidate time-frequency resource that is not within the time range indicated by the DRX setting, the method further comprising:
excluding, from the set of candidate time-frequency resources, an occupied resource with a sidelink reference signal receiving power S-RSRP greater than or equal to a threshold;
wherein, the threshold is determined based on a lower limit of a number of candidate time-frequency resources to be retained in the set of candidate time-frequency resources.

4. The method of claim 3, wherein the lower limit of the number is determined based on a number N of remaining candidate time-frequency resources that are obtained by excluding, from the set of candidate time-frequency resources, the candidate time-frequency resource that is not within the time range indicated by the DRX setting, and/or based on a defined proportional coefficient X, where X is greater than zero and less than 1.

5. The method of any of claims 1-4, wherein the direct transmission adopts M repetitions, and determining the target transmission resource used for the direct transmission sent to the receiving-end user equipment based on the discontinuous reception DRX setting of the receiving-end user equipment comprises:
according to the DRX setting, time-frequency transmission resources used for first K repetitions of the M repetitions are within a time range indicated by the DRX setting.

6. The method of claim 5, wherein,
determining the time-frequency transmission resources used for the first K repetitions and time-frequency transmission resources used for subsequent (M-K) repetitions respectively;
wherein, the time-frequency transmission resources used for the subsequent (M-K) repetitions are within the time range indicated by the DRX setting, or within a time period after the time range indicated by the DRX setting in which the first K repetitions are transmitted.

7. The method of claim 5, wherein a value of the K is obtained by at least one of the following methods:
the value of the K being determined based on defined configuration information;
the value of the K being configured by a network device through a high-level signaling;
the value of the K being controlled by the network device through a downlink control signaling; or
the value of the K being sent by a target user equipment.

8. The method of any of claims 1-4, further comprising:
sending control information carrying the DRX setting to the receiving-end user equipment.

9. The method of claim 8, wherein,
the DRX setting carried by the control information is selected from a plurality of DRX settings, configured to indicate the receiving-end user equipment to adopt the DRX setting carried by the control information.

10. The method of any of claims 1-4, wherein the DRX setting of the receiving-end user equipment is obtained by at least one of the following methods:
the DRX setting being determined based on defined configuration information;
the DRX setting being sent by a network device;
the DRX setting being sent by the receiving-end user equipment; or
the DRX setting being sent by a target user equipment.

11. The method of any of claims 1-4, further comprising:
sending the direct transmission to the receiving-end user equipment through the time-frequency transmission resource;
wherein, the direct transmission carries information indicating a future time-frequency resource, configured to indicate that the receiving-end user equipment is in a state of receiving a sidelink control channel and/or a sidelink shared channel during a time period corresponding to the future time-frequency resource.

12. The method of claim 11, further comprising:
determining a reception time point of feedback information corresponding to the direct transmission; and
switching to the state of receiving the sidelink control channel and/or the sidelink shared channel according to the reception time point.

13. A method for selecting a transmission resource, applied to a receiving-end user equipment, comprising:
receiving direct transmission sent by a sending-end user equipment through a time-frequency transmission resource;
wherein, the time-frequency transmission resource is determined based on a discontinuous reception DRX setting of the receiving-end user equipment.

14. The method of claim 13, wherein the direct transmission carries information indicating a future time-frequency resource, the method further comprises:
setting to a state of receiving a sidelink control channel and/or a sidelink shared channel during a time period corresponding to the future time-frequency resource.

15. The method of claim 14, wherein setting to the state of receiving the sidelink control channel and/or the sidelink shared channel during the time period corresponding to the future time-frequency resource comprises:
switching to the state of receiving the sidelink control channel and/or the sidelink shared channel before a starting time point of the time period corresponding to the future time-frequency resource.

16. The method of claim 15, wherein,
an interval between a switching time point of switching to the state and the starting time point is defined, or the interval is configured by a network device.

17. The method of claim 14, wherein, the future time-frequency resource is a non-periodic resource, and setting to the state of receiving the sidelink control channel and/or the sidelink shared channel during the time period corresponding to the future time-frequency resource comprises:
in response to not receiving a target transport block TB of the direct transmission before the time period corresponding to the future time-frequency resource, setting to the state of receiving the sidelink control channel and/or the sidelink shared channel during the time period corresponding to the future time-frequency resource of the target TB.

18. The method of claim 17, further comprising:
in response to receiving the target TB of the direct transmission before the time period corresponding to the future time-frequency resource, performing state switching according to the DRX setting during the time period corresponding to the future time-frequency resource of the target TB.

19. The method of any of claims 13-18, further comprising:
receiving control information carrying the DRX setting sent by the sending-end user equipment; and
switching to a state of receiving a sidelink control channel and/or a sidelink shared channel according to a time range indicated by the DRX setting in an activated state.

20. An apparatus for selecting a transmission resource, applied to a sending-end user equipment, comprising:
a determining module, configured to determine a time-frequency transmission resource used for direct transmission sent to a receiving-end user equipment based on a discontinuous reception DRX setting of the receiving-end user equipment.

21. An apparatus for selecting a transmission resource, applied to a receiving-end user equipment, comprising:
a receiving module, configured to receive direct transmission sent by a sending-end user equipment through a time-frequency transmission resource;
wherein, the time-frequency transmission resource is determined based on a discontinuous reception DRX setting of the receiving-end user equipment.

22. A communication device, comprising: a transceiver; a memory; and a processor, respectively connected with the transceiver and the memory, and configured to control wireless signal sending and receiving of the transceiver and to implement the method of any of claims 1 to 12 or 13 to 19 by executing computer-executable instructions on the memory.

23. A computer storage medium having computer-executable instructions stored thereon that, when executed by a processor, implement the method of any of claims 1 to 12 or 13 to 19.

24. A computer program product, comprising computer programs that, when executed by a processor, implement the method of any of claims 1 to 12 or 13 to 19.
